# EUROPEAN PATENT APPLICATION

(11) **EP 4 550 768 A1**
(43) Date of publication of application: **07.05.2025**
(21) Application number: 23860669.3
(22) Date of filing: 14.07.2023
(51) Int. Cl.: H04M 1/72454, H04M 1/02, G06F 3/041, G06F 3/0484, G06F 3/0481

(54) **ELECTRONIC DEVICE REPRODUCING VIDEO ACCORDING TO MOTION OF HINGE OR MOTOR**

(30) Priority: 30.08.2022 KR 20220108858; 13.10.2022 KR 20220131457
(71) Applicant: Samsung Electronics Co., Ltd., Suwon-si, Gyeonggi-do 16677 (KR)
(72) Inventor: KIM, Jeonghoon, Suwon-si Gyeonggi-do 16677 (KR); KWON, Banghyun, Suwon-si Gyeonggi-do 16677 (KR); MOON, Homin, Suwon-si Gyeonggi-do 16677 (KR); KIM, Sangheon, Suwon-si Gyeonggi-do 16677 (KR); LIM, Yeunwook, Suwon-si Gyeonggi-do 16677 (KR)
(74) Representative: Nederlandsch Octrooibureau
(86) International application number: PCT/KR2023/010100
(87) International publication number: WO 2024/048987

(57) **Abstract**

Disclosed is an electronic device which reproduces a video according to the motion of a hinge or a motor. According to a disclosed embodiment, the electronic device may comprise a flexible display comprising at least one folding area. The folding area may be an area in which the flexible display is folded. The electronic device may comprise at least one hinge capable of changing the at least one folding area into an unfolding state or folding state. The at least one hinge may be folded or unfolded at a first to second angle. The electronic device may comprise a plurality of sensors which collect folding data comprising information about a state of the at least one hinge. The electronic device may comprise a memory which stores a video and folding data, the video comprising a plurality of images to be displayed on the flexible display. The electronic device may comprise a processor which determines changing of the at least one hinge by reading the folding data. The electronic device may comprise a processor which matches the plurality of images with a plurality of angles included in the first to second angle, respectively. The electronic device may comprise a processor which determines a current angle of the changed hinge by using the folding data. The electronic device may comprise a processor which displays, on the flexible display, an image matching the current angle of the changed hinge from among the plurality of images.

## Description

### TECHNICAL FIELD

Embodiments of the present disclosure relate to an electronic device for playing a video according to the movement of a hinge or motor.

### BACKGROUND ART

An electronic device may display a wallpaper and/or a lock screen on a display. The wallpaper and/or the lock screen of the electronic device may provide an aesthetic experience to a user. The user may set the wallpaper and/or the lock screen using a desired image and/or video.

A foldable electronic device, for example, an electronic device such as a smartphone with a flexible display that can be folded and unfolded, and a foldable electronic device such as a laptop may also display a wallpaper and/or a lock screen. If a user sets a video as the wallpaper and/or the lock screen, the video may be played when the foldable electronic device is unfolded.

### DISCLOSURE OF THE INVENTION

### TECHNICAL SOLUTIONS

According to an embodiment, an electronic device may include a flexible display with at least one folding area. The folding area may be an area where the flexible display is folded. The electronic device may include at least one hinge capable of deforming the at least one folding area to an unfolded state or a folded state. The at least one hinge may be folded or unfolded between a first angle and a second angle. The electronic device may include a plurality of sensors configured to collect folding data including information on a state of the at least one hinge. The electronic device may include a memory storing a video including a plurality of images to be displayed on the flexible display and the folding data. The electronic device may include a processor configured to read the folding data to determine the deformation of the at least one hinge. The electronic device may include the processor configured to match the plurality of images to a plurality of angles between the first angle and the second angle. The electronic device may include the processor configured to determine a current angle of the deformed hinge using the folding data. The electronic device may include the processor configured to display an image matched to the current angle of the deformed hinge, among the plurality of images, on the flexible display.

According to an embodiment, an electronic device may include a flexible display with at least one rollable area. The rollable area may be an area where the flexible display is rolled by a motor. The electronic device may include at least one motor capable of deforming the at least one rollable area to an open state or a closed state. The at least one motor may operate in a range of a first rotation angle to a second rotation angle. The electronic device may include a plurality of sensors configured to collect data including information on a state of the at least one motor. The electronic device may include a memory storing a video including a plurality of images to be displayed on the flexible display and the data. The electronic device may include a processor configured to read the data to determine the deformation of the at least one rollable area. The electronic device may include the processor configured to match the plurality of images to a plurality of angles between the first rotation angle and the second rotation angle. The electronic device may include the processor configured to determine a current rotation angle of the at least one motor using the data. The electronic device may include the processor configured to display an image matched to the current rotation angle of the at least one motor, among the plurality of images, on the flexible display.

According to an embodiment, an electronic device may include a housing portion including a display panel. The electronic device may include a main body portion including a processor, a memory, and a plurality of sensors. The electronic device may include at least one hinge connecting the housing portion and the main body portion, and capable of deforming the housing portion and the main body portion to a folded state or an unfolded state in a range of a first angle to a second angle. The plurality of sensors may collect data including information about a state of the at least one hinge. The memory may store a video including a plurality of images to be displayed on the display panel and the data. The processor may read the data to determine the deformation of the at least one hinge. The processor may match the plurality of images to a plurality of angles between the first angle and the second angle, respectively. The processor may determine a current angle of the deformed hinge using the data, and display an image matched to the current angle of the deformed hinge, among the plurality of images, on the display panel.

According to an embodiment, in an operating method performed by an electronic device, the electronic device may include a flexible display with at least one folding area. The folding area may be an area where the flexible display is folded. The electronic device may include at least one hinge capable of deforming the at least one folding area to an unfolded state or a folded state. The at least one hinge may be folded or unfolded between a first angle and a second angle. The electronic device may include a plurality of sensors configured to collect folding data including information on a state of the at least one hinge. The electronic device may include a memory storing a video including a plurality of images to be displayed on the flexible display and the folding data. The operating method may include reading the folding data to determine the deformation of the at least one hinge. The operating method may include matching the plurality of images to a plurality of angles between the first angle and the second angle. The operating method may include determining a current angle of the deformed hinge using the folding data. The operating method may include displaying an image matched to the current angle of the deformed hinge, among the plurality of images, on the flexible display.

A non-transitory computer-readable storage medium according to an embodiment may store one or more programs. The one or more programs, when executed by a processor of an electronic device, may include reading folding data to determine deformation of at least one hinge. The one or more programs, when executed by the processor of the electronic device, may include matching a plurality of images to a plurality of angles between a first angle and a second angle. The one or more programs, when executed by the processor of the electronic device, may include determining a current angle of the deformed hinge using the folding data. The one or more programs, when executed by the processor of the electronic device, may include displaying an image matched to the current angle of the deformed hinge, among the plurality of images, on a flexible display. The electronic device may include a flexible display with at least one folding area. The folding area may be an area where the flexible display is folded. The electronic device may include at least one hinge capable of deforming the at least one folding area to an unfolded state or a folded state. The at least one hinge may be folded or unfolded between a first angle and a second angle. The electronic device may include a plurality of sensors configured to collect folding data including information on a state of the at least one hinge. The electronic device may include a memory storing a video including a plurality of images to be displayed on the flexible display and the folding data.

### BRIEF DESCRIPTION OF DRAWINGS

FIG. 1 is a block diagram of an electronic device in a network environment according to various embodiments.
FIG. 2 is a diagram illustrating an unfolded state of an electronic device according to various embodiments of the disclosure.
FIG. 3 is a diagram illustrating a folded state of an electronic device according to various embodiments of the disclosure.
FIGS. 4A and 4B are perspective views illustrating examples of a fully unfolded state and a partially unfolded intermediate state of an electronic device according to various embodiments of the disclosure.
FIG. 5 is a flowchart illustrating an operation of an electronic device according to an embodiment of the disclosure.
FIG. 6 is a flowchart illustrating an operation of an electronic device according to an embodiment of the disclosure.
FIGS. 7A and 7B are diagrams illustrating a method of matching a folded angle of an electronic device to an image according to an embodiment of the disclosure.
FIG. 8 is a diagram illustrating an example of displaying an image according to an embodiment of the disclosure.
FIG. 9 is a diagram illustrating an electronic device having various form factors to perform operations according to an embodiment of the disclosure.
FIG. 10 is a diagram illustrating an operation of an electronic device including a flexible display according to an embodiment of the disclosure.
FIG. 11 is a diagram illustrating an operation of an electronic device including a flexible display according to an embodiment of the disclosure.
FIG. 12 is a diagram illustrating an operation of an electronic device according to an embodiment of the disclosure.
FIG. 13 is a flowchart illustrating an operation of an electronic device according to an embodiment of the disclosure.

### BEST MODE FOR CARRYING OUT THE INVENTION

Hereinafter, embodiments will be described in detail with reference to the accompanying drawings. When describing the embodiments with reference to the accompanying drawings, like reference numerals refer to like components, and any repeated description related thereto will be omitted.

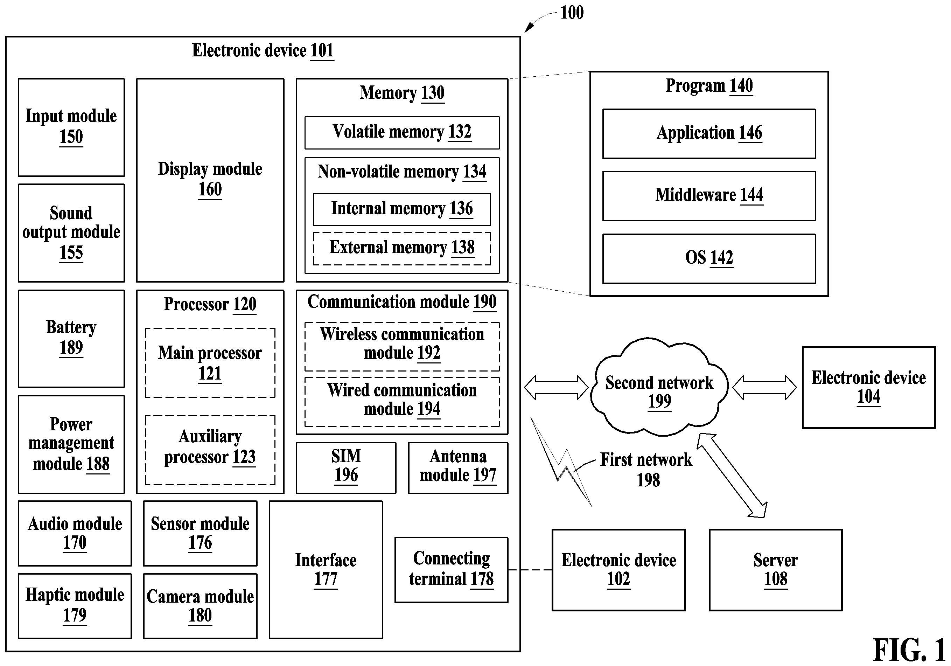

FIG. 1 is a block diagram of an electronic device 101 in a network environment 100 according to various embodiments.

Referring to FIG. 1, the electronic device 101 in the network environment 100 may communicate with an electronic device 102 via a first network 198 (e.g., a short-range wireless communication network), or communicate with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented as separate from, or as part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for processing of an artificial intelligence (AI) model. An artificial intelligence model may be generated through machine learning. Such learning may be performed by, for example, the electronic device 101 in which artificial intelligence is performed, or performed via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof, but is not limited thereto. The artificial intelligence model may, additionally or alternatively, include a software structure other than the hardware structure.

The memory 130 may store various pieces of data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing a record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal or vice versa. According to an embodiment, the audio module 170 may obtain the sound via the input module 150, or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

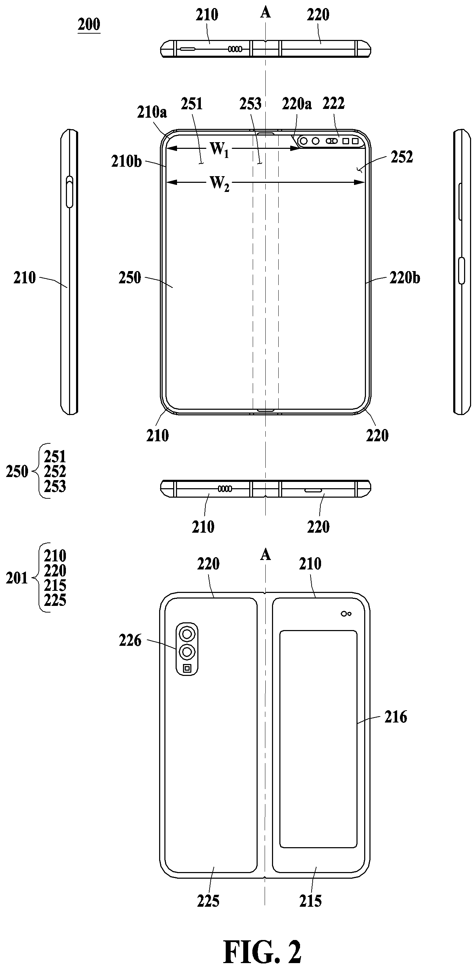

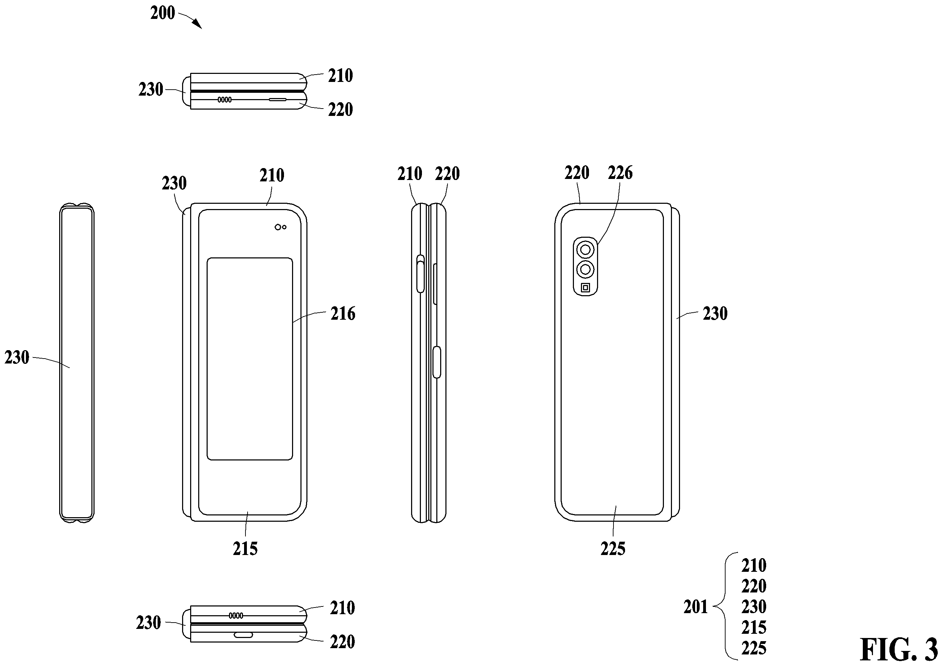

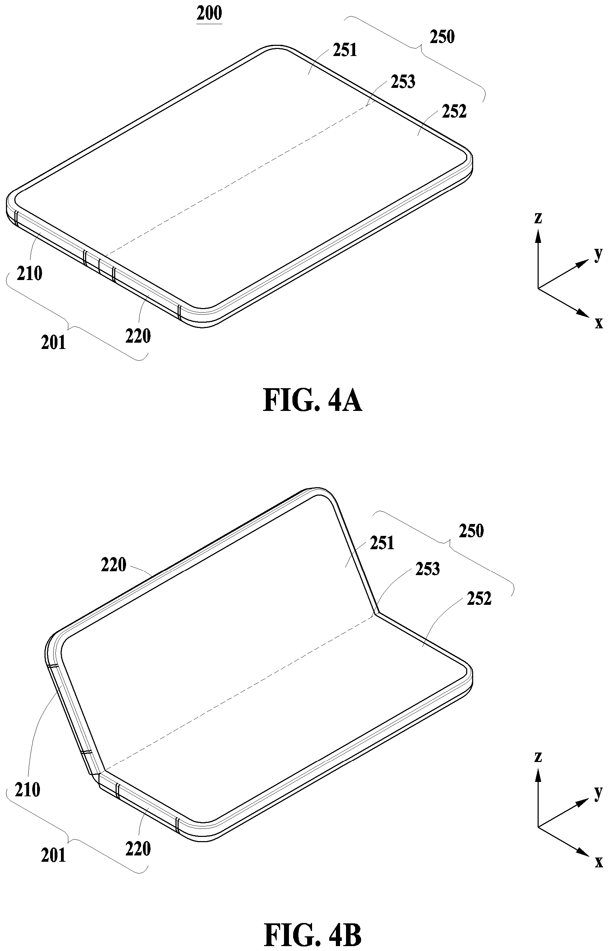

FIG. 2 is a diagram illustrating an unfolded state of an electronic device 200 according to various embodiments of the disclosure. FIG. 3 is a diagram illustrating a folded state of the electronic device 200 according to various embodiments of the disclosure. FIG. 4 is a perspective view illustrating an example of a fully unfolded state or a partially unfolded intermediate state of the electronic device 200 according to various embodiments of the disclosure.

The electronic device 200 of FIGS. 2 through 4 is an example of the electronic device 101 of FIG. 1, and may be a foldable or bendable electronic device.

In FIG. 4 and other following drawings, illustrated is a spatial coordinate system defined by the X-axis, the Y-axis, and the Z-axis that are orthogonal to each other. Here, the X-axis may denote the width direction of the electronic device, the Y-axis may denote the length direction of the electronic device, and the Z-axis may denote the height (or thickness) direction of the electronic device. In the following description, a "first direction" may refer to a direction parallel to the Z-axis.

Referring to FIGS. 2 and 3, in an embodiment, the electronic device 200 may include a foldable housing 201, and a flexible or foldable display 250 (hereinafter simply referred to as the "display" 250) (e.g., the display module 160 of FIG. 1) disposed in a space formed by the foldable housing 201. According to an embodiment, a surface on which the display 250 is disposed (or a surface on which the display 250 is viewed from an outside of the electronic device 200) may be defined as a front surface of the electronic device 200. In addition, a surface opposite to the front surface may be defined as a rear surface of the electronic device 200. Further, a surface surrounding a space between the front surface and the rear surface may be defined as a side surface of the electronic device 200.

According to various embodiments, the foldable housing 201 may include a first housing structure 210, a second housing structure 220 including a sensor area 222, a first rear cover 215, a second rear cover 225, and a hinge structure 230. Here, the hinge structure 230 may include a hinge cover that covers a foldable portion of the foldable housing 201. The foldable housing 201 of the electronic device 200 is not limited to the shape and coupling shown in FIGS. 2 and 3, and may be implemented in a different shape or a different combination and/or coupling of components. For example, in another embodiment, the first housing structure 210 and the first rear cover 215 may be integrally formed, and the second housing structure 220 and the second rear cover 225 may be integrally formed.

According to various embodiments, the first housing structure 210 may be connected to the hinge structure 230 and may include a first surface facing a first direction and a second surface facing a second direction opposite to the first direction. The second housing structure 220 may be connected to the hinge structure 230 and may include a third surface facing a third direction and a fourth surface facing a fourth direction opposite to the third direction. The second housing structure 220 may rotate with respect to the first housing structure 210 about the hinge structure 230. A state of the electronic device 200 may be changed to a folded state or an unfolded state.

According to an embodiment, the first surface may face the third surface in a state in which the electronic device 200 is fully folded, and the third direction may be identical to the first direction in a state in which the electronic device 200 is fully unfolded.

According to various embodiments, the first housing structure 210 and the second housing structure 220 may be disposed on both sides of a folding axis A and generally symmetrical with respect to the folding axis A. As described hereinafter, an angle or distance between the first housing structure 210 and the second housing structure 220 may vary according to whether the state of the electronic device 200 is the unfolded state, the folded state, or a partially unfolded (or partially folded) intermediate state. According to an embodiment, unlike the first housing structure 210, the second housing structure 220 may additionally include the sensor area 222, in which various sensors are arranged, but may have a symmetrical shape in the other area.

According to various embodiments, as shown in FIG. 2, the first housing structure 210 and the second housing structure 220 may together form a recess for accommodating the display 200. According to an embodiment, due to the sensor area 222, the recess may have at least two different widths in a direction perpendicular to the folding axis A. For example, the recess may have a first width w1 between a first portion 210a of the first housing structure 210 parallel to the folding axis A and a first portion 220a of the second housing structure 220 formed on a periphery of the sensor area 222, and a second width w2 formed by a second portion 210b of the first housing structure 210 and a second portion 220b of the second housing structure 220 not corresponding to the sensor area 222 and being parallel to the folding axis A. In this case, the second width w2 may be longer than the first width w1. According to an embodiment, the first portion 220a and the second portion 220b of the second housing structure 220 may be at different distances from the folding axis A. The widths of the recess are not limited to the shown example. In another embodiment, the recess may have a plurality of widths due to the shape of the sensor area 222 or asymmetrical portions of the first housing structure 210 and the second housing structure 220. According to various embodiments, the sensor area 222 may be formed to have a predetermined area adjacent to one corner of the second housing structure 220. However, the arrangement, shape, and size of the sensor area 222 are not limited to the shown example. For example, in another embodiment, the sensor area 222 may be provided at another corner of the second housing structure 220 or in a predetermined area between an upper corner and a lower corner. In an embodiment, components embedded in the electronic device 200 to perform various functions may be exposed to the front surface of the electronic device 200 through the sensor area 222 or through one or more openings provided in the sensor area 222. In various embodiments, the components may include various types of sensors. The sensors may include, for example, at least one of a front camera, a receiver, or a proximity sensor. According to various embodiments, the sensor area 222 may not be included in the second housing structure 220 or may be formed at a position different from that shown in the drawings.

According to various embodiments, at least a portion of the first housing structure 210 and the second housing structure 220 may be formed of a metal material or a non-metal material having a selected magnitude of rigidity to support the display 250. At least a portion formed of the metal material may provide a ground plane for the electronic device 200, and may be electrically connected to a ground line formed on a PCB disposed inside the foldable housing 201.

According to various embodiments, the first rear cover 215 may be disposed on one side of the folding axis A on the rear surface of the electronic device 200, and may have, for example, a substantially rectangular periphery that may be enclosed by the first housing structure 210. Similarly, the second rear cover 225 may be disposed on another side of the folding axis A on the rear surface of the electronic device 200, and may have a periphery that may be enclosed by the second housing structure 220.

According to various embodiments, the first rear cover 215 and the second rear cover 225 may be substantially symmetrical about the folding axis A. However, the first rear cover 215 and the second rear cover 225 are not necessarily mutually symmetrical, and in another embodiment, the electronic device 200 may include the first rear cover 215 and the second rear cover 225 having various shapes. In an embodiment, the first rear cover 215 may be formed integrally with the first housing structure 210, and the second rear cover 225 may be formed integrally with the second housing structure 220.

According to various embodiments, the first rear cover 215, the second rear cover 225, the first housing structure 210, and the second housing structure 220 may form a space in which various components (e.g., a PCB, or a battery) of the electronic device 200 are to be arranged. According to an embodiment, one or more components may be disposed or visually exposed on the rear surface of the electronic device 200. For example, at least a portion of a sub-display may be visually exposed through a first rear area 216 of the first rear cover 215. In an embodiment, one or more components or sensors may be visually exposed through a second rear area 226 of the second rear cover 225. In various embodiments, the sensors may include a proximity sensor and/or a rear camera.

According to various embodiments, a front camera exposed to the front surface of the electronic device 200 through one or more openings provided in the sensor area 222, or a rear camera exposed through the second rear area 226 of the second rear cover 225 may include one or more lenses, an image sensor, and/or an ISP. A flash may include, for example, a light-emitting diode (LED) or a xenon lamp. In some embodiments, two or more lenses (IR cameras, wide angle and telephoto lenses) and image sensors may be disposed on one face of the electronic device 200.

Referring to FIG. 3, the hinge cover may be disposed between the first housing structure 210 and the second housing structure 220 to cover internal components (e.g., the hinge structure 230). According to an embodiment, the hinge structure 230 may be covered by a portion of the first housing structure 310 and the second housing structure 320, or may be exposed to the outside, depending on the state of the electronic device 200 (e.g., the unfolded state, the intermediate state, or the folded state).

According to an embodiment, when the electronic device 200 is in the unfolded state (e.g., a fully unfolded state) as illustrated in FIG. 2, the hinge structure 230 may be covered by the first housing structure 210 and the second housing structure 220 not to be exposed. For another example, when the electronic device 200 is in the folded state (e.g., the fully folded state) as illustrated in FIG. 3, the hinge structure 230 may be exposed to the outside, being between the first housing structure 210 and the second housing structure 220. For still another example, in the intermediate state in which the first housing structure 210 and the second housing structure 220 are folded with a certain angle, the hinge structure 230 may be partially exposed to the outside, being between the first housing structure 210 and the second housing structure 220. However, the area exposed in this case may be smaller than that in the fully folded state. In an embodiment, the hinge structure 230 may have a curved surface.

According to various embodiments, the display 250 may be disposed in a space formed by the foldable housing 201. For example, the display 250 may be seated on the recess formed by the foldable housing 201 and may be viewed from the outside through the front surface of the electronic device 200. For example, the display 250 may constitute most of the front surface of the electronic device 200. Accordingly, the front surface of the electronic device 200 may include the display 250, and a partial area of the first housing structure 210 and a partial area of the second housing structure 220, which are adjacent to the display 250. In addition, the rear surface of the electronic device 200 may include the first rear cover 215, a partial area of the first housing structure 210 adjacent to the first rear cover 215, the second rear cover 225, and a partial area of the second housing structure 220 adjacent to the second rear cover 225.

According to various embodiments, the display 250 may refer to a display having at least a partial area that is deformable into a flat surface or a curved surface. According to an embodiment, the display 250 may include a folding area 253, a first area 251 disposed on one side of the folding area 253 (e.g., on the left side of the folding area 253 shown in FIG. 2), and a second area 252 disposed on the other side of the folding area 253 (e.g., on the right side of the folding area 253 shown in FIG. 2).

However, such an area division of the display 250 shown in FIG. 2 is merely an example, and the display 250 may be divided into a plurality of areas (e.g., four or more areas, or two areas) depending on a structure or functions thereof. For example, in the embodiment shown in FIG. 2, the display 200 may be divided into areas based on the folding area 253 extending in parallel to the folding axis A. In another embodiment, the display 200 may be divided into areas based on another folding axis (e.g., a folding axis parallel to a width direction of the electronic device).

According to various embodiments in the disclosure, the display 250 may be coupled to or disposed adjacent to a touch panel in which a touch sensing circuit and a pressure sensor configured to measure an intensity (or pressure) of a touch are provided. For example, the display 250 is an example of a touch panel, and may be coupled to or disposed adjacent to a touch panel for detecting an electromagnetic resonance (EMR) type stylus pen.

According to various embodiments, the first area 251 and the second area 252 may be generally symmetrical about the folding area 253. However, unlike the first area 251, the second area 252 may include a notch that is cut depending on the presence of the sensor area 222, but may be symmetrical to the first area 251 in the other areas. In other words, the first area 251 and the second area 252 may include mutually symmetrical portions and mutually asymmetrical portions.

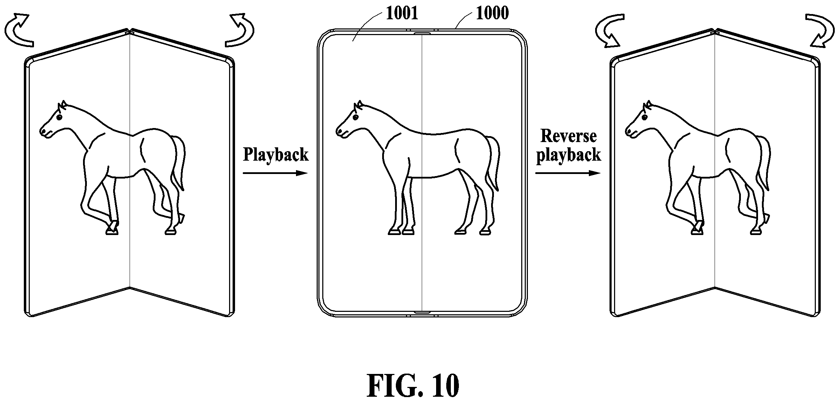

According to various embodiments, an edge thickness of each of the first area 251 and the second area 252 may be different from an edge thickness of the folding area 253. The edge thickness of the folding area 253 may be less than those of the first area 251 and the second area 252. For example, the first area 251 and the second area 252 may be asymmetrical in terms of thickness when cross-sectionally viewed. For example, an edge of the first area 251 may be formed to have a first radius of curvature, and an edge of the second area 252 may be formed to have a second radius of curvature different from the first radius of curvature. In another example, the first area 251 and the second area 252 may be symmetrical in terms of thickness when the first area 251 and the second area 252 are cross-sectionally viewed. It will be described later in detail through the embodiments disclosed in FIG. 10A and other following drawings.

Hereinafter, each area of the display 250, and operations of the first housing structure 210 and the second housing structure 220 depending on the state (e.g., a folded state, the unfolded state, or the intermediate state) of the electronic device 200) will be described.

According to various embodiments, when the electronic device 200 is in the unfolded state (e.g., FIG. 2), the first housing structure 210 and the second housing structure 220 may be arranged to face the same direction while forming an angle of 180 degrees. The surface of the first area 251 of the display 250 and the surface of the second area 252 thereof may face the same direction (e.g., the front direction of the electronic device) while forming 180 degrees. The folding area 253 may form the same plane in conjunction with the first area 251 and the second area 252.

According to various embodiments, when the electronic device 200 is in the folded state (e.g., FIG. 2), the first housing structure 210 and the second housing structure 220 may be arranged to face each other. The surface of the first area 251 of the display 250 and the surface of the second area 252 thereof may face each other while forming a narrow angle (e.g., between 0 degrees to 10 degrees). At least a portion of the folding area 253 may form a curved surface having a predetermined curvature.

According to various embodiments, when the electronic device 200 is in the intermediate state, the first housing structure 210 and the second housing structure 220 may be arranged with a certain angle. The surface of the first area 251 of the display 250 and the surface of the second area 252 thereof may form an angle greater than that in the folded state and smaller than that in the unfolded state. At least a portion of the folding area 253 may include a curved surface having a predetermined curvature, and the curvature may be smaller than that in the folded state.

FIG. 4A illustrates a fully unfolded state of the electronic device 200, and FIG. 4B illustrates a partially unfolded intermediate state of the electronic device 200. As described above, the state of the electronic device 200 may be changed to the folded state or the unfolded state. According to an embodiment, when viewed in a direction of a folding axis (e.g., the folding axis A of FIG. 2), the electronic device 200 may be folded in two types, i.e., an "in-folding" type in which the front surface of the electronic device 200 is folded to form an acute angle, and an "out-folding" type in which the front surface of the electronic device 200 is folded to form an obtuse angle. In an example, when the electronic device 200 is folded in the in-folding type, the first surface of the first housing structure 210 may face the third surface of the second housing structure 220. In the fully unfolded state, the first surface of the first housing structure 210 and the third surface of the second housing structure 220 may face the same direction (e.g., a direction parallel to the z-axis).

In another example, when the electronic device 200 is folded in the out-folding type, the second surface of the first housing structure 210 may face the fourth surface of the second housing structure 220.

In addition, although not shown in the drawings, the electronic device 200 may include a plurality of hinge axes (e.g., two parallel hinge axes including the folding axis A of FIG. 2 and another axis parallel to the folding axis A). In this case, the electronic device 200 may also be folded in a "multi-folding" type in which the in-folding type and the out-folding type are combined.

The in-folding type may refer to a state in which the display 250 is not exposed to the outside in the fully folded state. The out-folding type may refer to a state in which the display 250 is exposed to the outside in the fully folded state. FIG. 4B shows a partially unfolded intermediate state of the electronic device 200 during an in-folding process.

Although the state in which the electronic device 200 is folded in the in-folding type will be described below for convenience, it should be noted that the description may be similarly applied in the state in which the electronic device 200 is folded in the out-folding type.

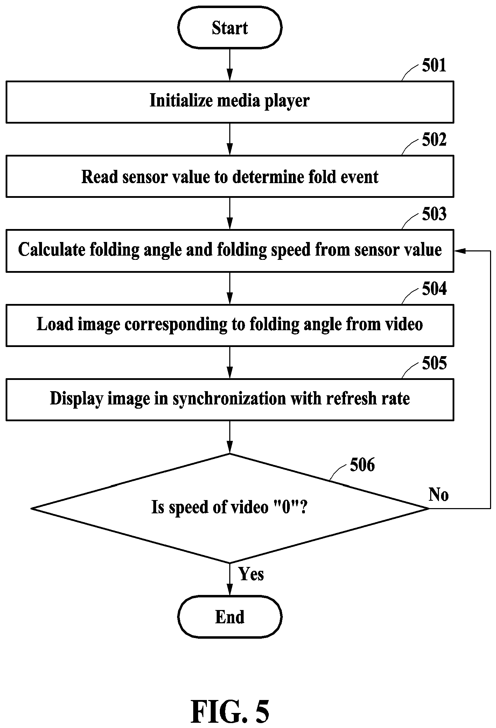

FIG. 5 is a flowchart illustrating an operation of an electronic device according to an embodiment of the disclosure.

In the following embodiment, operations may be performed sequentially, but are not necessarily performed sequentially. For example, the operations may be performed in different orders, and at least two of the operations may be performed in parallel. Operations 501 to 506 may be performed by at least one component (e.g., the processor 120 of FIG. 1) of an electronic device (e.g., the electronic device 101 of FIG. 1 and the electronic device 200 of FIG. 2).

In operation 501, the electronic device may initialize a media player. When a media player configured to execute a video set as the wallpaper and/or the lock screen is initialized, the video may be played from the beginning. Therefore, when a fold event occurs, the video may be played from the beginning.

In operation 502, the electronic device may read a sensor value to determine a fold event. The electronic device may include a plurality of sensors (e.g., the sensor module 176 of FIG. 1). The plurality of sensors may include a gyro sensor, an acceleration sensor, a grip sensor, and the like. The plurality of sensors may store the collected sensor values in a memory (e.g., the memory 130 of FIG. 1) of the electronic device.

According to an embodiment, when the electronic device includes a foldable display (e.g., the display module 160 of FIG. 1 and the display 250 of FIG. 2), the plurality of sensors may include a sensor configured to measure the angle of a hinge (e.g., the hinge structure 230 of FIG. 3). The sensor value may be folding data including information about the state of the hinge.

According to an embodiment, when the electronic device includes a rollable display (e.g., the display module 160 of FIG. 1), the plurality of sensors may include a sensor configured to measure the rotation angle of a motor that deforms the rollable display to an open state or a closed state. The sensor value may be data including information about the state of the motor.

According to an embodiment, when the electronic device includes a housing portion including a display panel (e.g., the display module 160 of FIG. 1) and a main body portion and when the housing portion and the main body portion are connected through a hinge, the plurality of sensors may include a sensor configured to measure the angle of the hinge connecting the housing portion and the main body portion. The sensor value may be data including information about the state of the hinge.

According to an embodiment, a processor of the electronic device may read a sensor value from the memory to determine whether a fold event occurs. For example, the processor may read a sensor value from the memory, read a sensor value again after one interval, and determine whether a fold event occurs based on a change in the folding angle.

In operation 503, when a fold event occurs, the electronic device may periodically read the sensor value stored in the memory. The electronic device may calculate the folding angle and the folding speed at which it is folded using the sensor value read periodically.

In an embodiment, when the electronic device includes a foldable display, the electronic device may calculate the folding speed at which the foldable display is folded or unfolded and the current angle of the hinge, using the folding data read periodically.

According to an embodiment, when the electronic device includes a rollable display, the electronic device may calculate the current rotation angle of the motor and the rotation speed of the motor using the data read periodically.

According to an embodiment, when the electronic device includes a housing portion including a display panel and a main body portion and when the housing portion and the main body portion are connected through a hinge, the electronic device may calculate the cur angle of the hinge and the folding speed using the data read periodically.

In operation 504, the electronic device may load an image corresponding to the current folding angle from the video.

According to an embodiment, the plurality of images included in the video may be matched to angles within the range of angle in which the hinge can operate, respectively. According to an embodiment, the plurality of images included in the video may be matched to angles within the range of rotation angle in which the motor can operate, respectively.

According to an embodiment, when the electronic device includes a foldable display, the electronic device may load an image matched to the current angle of the hinge. The loaded image may be displayed on the foldable display.

According to an embodiment, when the electronic device includes a rollable display, the electronic device may load an image matched to the current rotation angle of the motor. The loaded image may be displayed on the rollable display.

According to an embodiment, when the electronic device includes a housing portion including a display panel and a main body portion and when the housing portion and the main body portion are connected through a hinge, the electronic device may load an image matched to the current angle of the hinge. The loaded image may be displayed on the display panel.

**In** operation 505, the electronic device may display the image in synchronization with the refresh rate of the display.

According to an embodiment, the interval for the electronic device to read a sensor value from the memory may differ from the interval for the display to display one image. For example, the processor of the electronic device may read a sensor value from the memory at 40 milliseconds (ms), i.e., 25 hertz (Hz). The display may display one image approximately every 16.7 ms or 8.3 ms, i.e., at 60 Hz or 120 Hz.

According to an embodiment, the number of images that the display may display per second may be greater than the number of images that the processor may load per second by reading a sensor value. For example, the display may display 60 images per second, but the processor may load only 25 images per second by reading a sensor value. Therefore, the electronic device may provide a user with only 25 images per second through the display, and thus, the user may feel like the video is choppy during the playback.

According to an embodiment, the electronic device may display the image in synchronization with the refresh rate of the display. When the image is displayed in synchronization with the refresh rate of the display, the user may be provided with smooth video playback by being provided with images more than the images loaded by the processor reading a sensor value per second.

In operation 506, the electronic device may determine whether the speed of the video is "0". The electronic device may terminate the operation if the speed of the video is "0". The electronic device may perform operation 504 if the speed of the video is not "0".

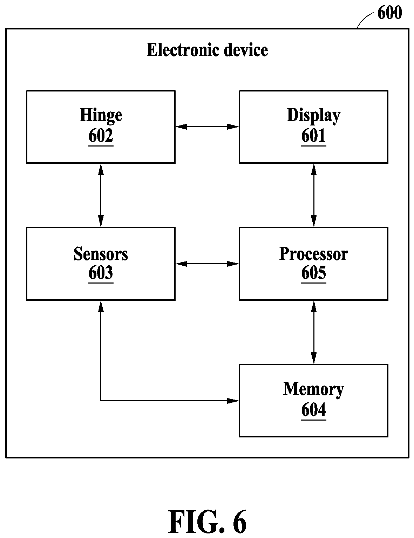

FIG. 6 is a flowchart illustrating an operation of an electronic device according to an embodiment of the disclosure.

Referring to FIG. 6, an electronic device 600 (e.g., the electronic device 101 of FIG. 1) is shown. Referring to FIG. 6, the electronic device 600 may include a display 601 (e.g., the display module 160 of FIG. 1), at least one hinge 602 (e.g., the hinge structure 230 of FIG. 3), a plurality of sensors 603 (e.g., the sensor module 176 of FIG. 1), a memory (e.g., the memory 130 of FIG. 1), and a processor (e.g., the processor 120 of FIG. 1). According to an embodiment, the electronic device 600 may include at least one motor (not shown) instead of the at least one hinge 602.

According to an embodiment, the display 601 may be a flexible display with at least one folding area (e.g., the folding area 253 of FIG. 2). According to an embodiment, the display 601 may be a flexible display with at least one rollable area. According to an embodiment, the display 601 may be a general display panel. According to an embodiment, the display 601 may display one image every predetermined interval. For example, the display 601 may have a refresh rate of 60 Hz and display 60 images per second. For example, the display 601 may have a refresh rate of 120 Hz and display 120 images per second.

According to an embodiment, the display 601 may display the wallpaper and/or the lock screen of the electronic device 600. The wallpaper and/or the lock screen displayed by the display 601 may be in a video format. For example, if a user sets a video as the wallpaper and/or the lock screen, the display 601 may play the video when displaying the wallpaper and/or the lock screen.

According to an embodiment, when the display 601 is a flexible display with at least one folding area, the at least one hinge 602 may deform the at least one folding area to an unfolded state or a folded state. The at least one folding area may be an area where the flexible display is folded. The at least one hinge 602 may be folded or unfolded between a first angle and a second angle. The at least one hinge 602 may deform the at least one folding area to an unfolded state or a folded state between the first angle and the second angle.

According to an embodiment, when the display 601 is a flexible display with at least one rollable area, at least one motor (not shown) may deform the at least one rollable area to an open state or a closed state. The rollable area may be an area that is rolled around the at least one motor (not shown) when deformed to the closed state. The at least one motor may operate in a range of a first rotation angle to a second rotation angle.

According to an embodiment, when the display 601 is a general display panel rather than a flexible display, the at least one hinge 602 may connect a housing portion including a display panel and a main body portion. The main body portion may include a plurality of sensors 603, a memory 604, and a processor 605. The at least one hinge 602 may deform the housing portion and the main body portion to a folded state or an unfolded state in a range of a first angle to a second angle.

According to an embodiment, the plurality of sensors 603 may collect a sensor value being information about the state of the at least one hinge 603 or the at least one motor (not shown). For example, when the display is a flexible display with at least one folding area, the plurality of sensors 603 may collect folding data including information about the state of the at least one hinge 603. The plurality of sensors 603 may collect data including information about the state of the at least one hinge 603 connecting the housing portion including the display panel and the main body portion. When the display is a flexible display with at least one rollable area, the plurality of sensors 603 may collect data including information about the state of the at least one motor.

According to an embodiment, the memory 604 (e.g., the memory 130 of FIG. 1) may include a video to be displayed on the display 601. The video may include a plurality of images. The memory may store data collected by the plurality of sensors 603. For example, the memory 604 may store folding data collected by the plurality of sensors 603. The memory may store data including information about the states of the one or more hinges 603 measured by the plurality of sensors 603. The memory 604 may store data including information about the states of the one or more motors (not shown) measured by the plurality of sensors 603.

According to an embodiment, the processor 605 (e.g., the processor 120 of FIG. 1) may control the display 601, the sensors 603, and the memory 604 through software. The processor 605 may read the sensor value stored by the plurality of sensors 603 from the memory 604. For example, the processor 605 may read folding data, which is the sensor value stored by the plurality of sensors 603, from the memory 604. The processor 605 may read data including information about the state of at least one hinge, which is the sensor value stored by the plurality of sensors 603, from the memory 604. The processor 605 may read data including information about the state of at least one motor, which is the sensor value stored by the plurality of sensors 603, from the memory 604.

According to an embodiment, the processor 605 may determine the deformation of the at least one hinge 603 or the at least one motor using the read sensor value.

According to an embodiment, the processor 605 may match a plurality of images included in the video stored in the memory 604 to angles at which the at least one hinge 603 or the at least one motor can operate. The processor 605 may match a plurality of images to angles within the range of angle in which the at least one hinge 603 can operate. For example, the processor may match 90 images to angles between 0 degrees, a first angle, and 180 degrees, a second angle, respectively. The processor 605 may match a plurality of images to rotation angles within the range of rotation angle in which the at least one motor can operate. For example, the processor may match the 90 images to rotation angles between 0 degrees, a first rotation angle, and 360 degrees, a second rotation angle, respectively.

According to an embodiment, the processor 605 may periodically read the sensor value stored by the plurality of sensors 603 from the memory. For example, the processor 605 may read the sensor value stored by the plurality of sensors 603 from the memory every 40 ms. Therefore, the number of times the processor 605 reads the sensor value may be less when the hinge 602 is quickly unfolded or folded than when the hinge 605 is slowly unfolded or folded. According to an embodiment, as the hinge is unfolded or folded fast, the number of times the processor 605 reads the sensor value may decrease. For example, when the hinge 602 is folded quickly, the processor may read the sensor value 5 times, but when the hinge 602 is folded slowly, the processor may read the sensor value 10 times. According to an embodiment, the same may also apply to a motor rather than the hinge 602. For example, when the motor rotates quickly, the processor may read the sensor value 5 times, but when the motor rotates slowly, the processor may read the sensor value 10 times.

According to an embodiment, the processor 605 may determine the current angle of the hinge or the current rotation angle of the motor based on the sensor value.

According to an embodiment, the processor 605 may display an image matched to the current angle of the hinge determined based on the sensor value on the display 601. For example, when the current angle of the hinge determined based on the folding data is 30 degrees, the processor may include an image matched to 30 degrees in the processor. According to an embodiment, the processor 605 may display an image matched to the current rotation angle of the motor determined based on the sensor value on the display 601. For example, when the current rotation angle of the motor determined based on the sensor value is 90 degrees, the processor 605 may display an image matched to 90 degrees on the display 601.

Hereinafter, the range of angle according to the present disclosure and a method of matching a plurality of images to angles within the range of angle will be described.

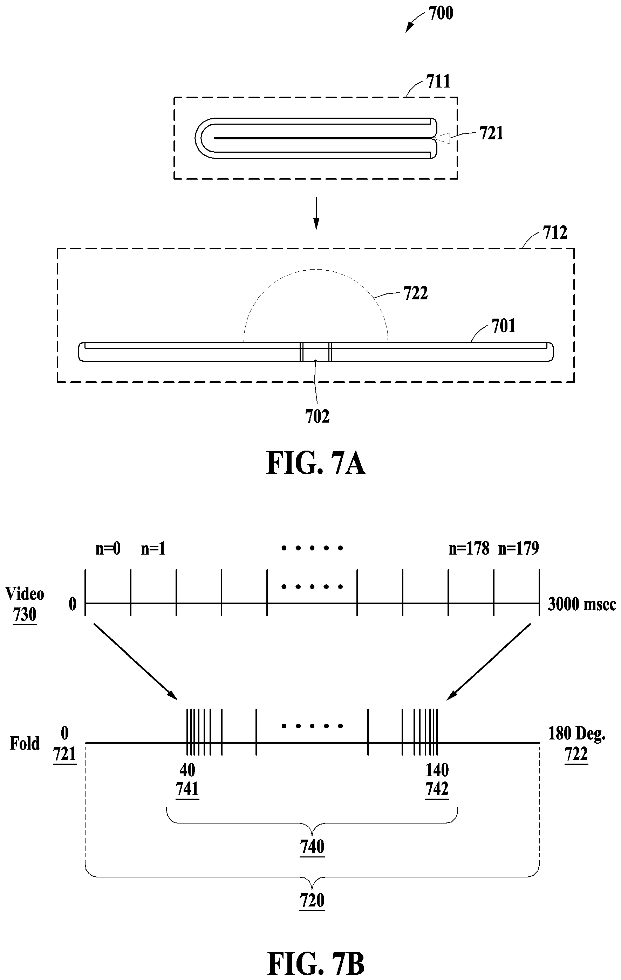

FIG. 7 illustrates a method of matching a folded angle of an electronic device to an image according to an embodiment of the disclosure.

Referring to FIG. 7A, an electronic device 700 (e.g., the electronic device 101 of FIG. 1, the electronic device 200 of FIG. 2, and the electronic device 600 of FIG. 6) including a flexible display 701 (e.g., the display module 160 of FIG. 1, the display 250 of FIG. 2, and the display 601 of FIG. 6) with one folding area (e.g., the folding area 253 of FIG. 2) and one hinge 702 (e.g., the hinge structure 230 of FIG. 2 and the hinge 602 of FIG. 6) capable of deforming the one folding area to an unfolded state 712 or a folded state 711 is shown. FIG. 7B is a drawing illustrating a method of matching a plurality of images included in a 3-second long video 730 to angles within a range of angle 720 in which the hinge 702 may operate.

Referring to FIG. 7A, the electronic device 700 in the folded state 711 and the electronic device 700 in the unfolded state 712 are shown.

According to an embodiment, the electronic device 700 may be in the folded state 711 when the hinge 702 is at a first angle 721. For example, the electronic device 700 may be in the folded state 711 when the hinge 702 is at 0 degrees, which is the first angle 721. According to an embodiment, the electronic device 700 may be in the unfolded state 711 when the hinge 702 is at a second angle 722. For example, the electronic device 700 may be in the unfolded state 712 when the hinge 702 is at 180 degrees, which is the second angle 722.

According to an embodiment, the range 720 in which the hinge 702 can operate may be between the first angle 721 and the second angle 722. The folding area of the electronic device 700 may be folded or unfolded between the first angle 721 and the second angle 722 by the hinge 702.

According to an embodiment not shown, the electronic device (e.g., the electronic device 101 of FIG. 1 and the electronic device 600 of FIG. 6) may include a general display module (e.g., the display module 160 of FIG. 1 and the display 601 of FIG. 6) rather than the flexible display 701. The electronic device may include at least one hinge (e.g., the hinge 602 of FIG. 6), and the hinge may connect a housing portion including a display module and a main body portion. The at least one hinge may operate in the range of the first angle to the second angle. According to an embodiment, the electronic device may be in a folded state when the hinge is at the first angle. For example, the electronic device may be in the folded state when the hinge is at 0 degrees, which is the first angle. According to an embodiment, the electronic device may be in an unfolded state when the hinge is at the second angle. For example, the electronic device may be in the unfolded state when the hinge is at 180 degrees, which is the second angle.

According to an embodiment not shown, the electronic device (e.g., the electronic device 101 of FIG. 1 and the electronic device 600 of FIG. 6) may include a flexible display (e.g., the display module 160 of FIG. 1 and the display 601 of FIG. 6) with a rollable area. The electronic device may include at least one rollable area that is deformed by at least one motor to a closed state in which the area of the display is reduced or an open state in which the area of the display is expanded. The at least one motor may operate in a range of a first rotation angle to a second rotation angle. According to an embodiment, the electronic device may be in the closed state when the rotation angle of the motor is the first rotation angle. For example, the electronic device may be in the closed state when the rotation angle of the motor is 0 degrees, which is the first rotation angle. According to an embodiment, the electronic device may be in the open state when the rotation angle of the motor is the second rotation angle. For example, the electronic device may be in the open state when the rotation angle of the motor is 360 degrees, which is the second rotation angle.

Referring to FIG. 7B, the 3-second long video 730 with 60 fps is shown. The running time and the number of frames per second of the video 730 are examples only and are not limited thereto. The video 730 may display 60 images per second. The video 730 may display one image every 16.7 ms. The video 730 may include a total of 180 images.

Hereinafter, a method of matching a plurality of images by the electronic device 700 including a flexible display 701 with at least one folding area will be described.

According to an embodiment, a plurality of images included in the video 730 may be matched to angles within the range of angle 720 in which the hinge 702 can operate. A processor (e.g., the processor 120 of FIG. 1 and the processor 605 of FIG. 6) included in the electronic device 700 may match the plurality of images included in the video 730 to angles within the range of angle 720 in which the hinge 702 can operate.

For example, when playing a video 730 including a total of 180 images, the processor may match the first image displayed first to 0 degrees, which is the first angle 721. The processor may match the 90-th image, among the total of 180 images, to 90 degrees, which is the middle angle between the first angle 721 and the second angle 722. The processor may match the last image, among the total of 180 images, to 180 degrees, which is the second angle 722.

According to an embodiment, the plurality of images included in the video 730 may be matched, by an equal angle, to angles within the range of angle 720 in which the hinge 702 can operate. For example, the total of 180 images may be matched, by an equal angle of 1 degree, to 180 degrees, which is the range of angle 720 in which the hinge 702 can operate. Therefore, the first image may be matched to 0 degrees which is the first angle 721, the second image may be matched to 1 degree, and the third image may be matched to 2 degrees.

According to an embodiment, the equal angle may be a value obtained by dividing the range of the first angle 721 to the second angle 722 by the number of the plurality of images. The equal angle may be a value obtained by dividing the difference between the first angle 721 and the second angle 722 by the number of the plurality of images. For example, the equal angle may be 1 degree, which is the value obtained by dividing 180 degrees, which is the difference between 0 degrees, which is the first angle 721, and 180 degrees, which is the second angle 722, by 180 which is the number of the plurality of images.

Hereinafter, a method of matching a plurality of images by an electronic device including a flexible display with at least one rollable area will be described.

According to an embodiment, in an electronic device including a flexible display with at least one rollable area, the first angle 721 may correspond to a first rotation angle. The second angle 722 may correspond to a second rotation angle. A first threshold angle 741 may correspond to a first threshold rotation angle. A second threshold angle 742 may correspond to a second threshold rotation angle.

According to an embodiment, a plurality of images included in the video 730 may be matched to rotation angles within the range of rotation angle in which a motor (not shown) can operate. A processor (e.g., the processor 120 of FIG. 1 and the processor 605 of FIG. 6) included in the electronic device may match the plurality of images included in the video 730 to rotation angles within the range of rotation angle in which the motor (not shown) can operate.

According to an embodiment, the plurality of images included in the video 730 may be matched, by an equal angle, to angles within the range of rotation angle in which the motor can operate.

According to an embodiment, the equal angle may be a value obtained by dividing the range of the first rotation angle to the second rotation angle by the number of the plurality of images. The equal angle may be a value obtained by dividing the difference between the first rotation angle and the second rotation angle by the number of the plurality of images.

Hereinafter, a method of matching a plurality of images by an electronic device including a general display panel rather than a flexible display will be described.

According to an embodiment, in an electronic device including a general display panel, the first angle 721 may correspond to a first angle formed by a housing portion and a main body portion. The second angle 722 may correspond to a second angle formed by the housing portion and the main body portion. The first threshold angle 741 may correspond to a first threshold angle formed by the housing portion and the main body portion. The second threshold angle 742 may correspond to a second threshold angle formed by the housing portion and the main body portion.

According to an embodiment, a plurality of images included in the video 730 may be matched to angles within the range of angle in which the hinge connecting the housing portion and the main body portion can operate. A processor (e.g., the processor 120 of FIG. 1 and the processor 605 of FIG. 6) included in the electronic device may match the plurality of images included in the video 730 to the angles within the range of angle in which the hinge connecting the housing portion and the main body portion can operate.

According to an embodiment, the plurality of images included in the video 730 may be matched, by an equal angle, to angles within the range of angle in which the hinge can operate.

According to an embodiment, the equal angle may be a value obtained by dividing the range of the first angle to the second angle by the number of the plurality of images. The equal angle may be a value obtained by dividing the difference between the first angle and the second angle by the number of the plurality of images.

The electronic device 700 may have a change in the angle of the hinge 702 as shaken irrespective of the intention of a user. For example, if a user runs or walks while carrying the electronic device 700, the angle of the hinge 702 may change. Since the processor reads a sensor value periodically, the processor may determine that the angle of the hinge 702 changes. At this time, the processor may determine that a fold event occurs irrespective of the intention of the user and display an image on the display 701.

According to an embodiment, to prevent such malfunction of a fold event, the processor may set a dead zone in a portion of the range 720 in which the hinge can operate. For example, the processor may turn off the display 701 or display the same image irrespective of the angle in the dead zone even if the angle of the hinge 702 changes.

According to an embodiment, the processor may match a plurality of images included in the video 730 only to angles within a threshold angle range 740. For example, the processor may match the plurality of images included in the video 730 only to angles within a range of 40 degrees, which is the first threshold angle 741, and 140 degrees, which is the second threshold angle 742. According to an embodiment, the ranges outside the threshold angle range 740 may be dead zones. For example, referring to FIG. 7B, 0 degrees to 40 degrees and 140 degrees to 180 degrees may be dead zones.

According to an embodiment, the processor may display a matched image on the display 701 according to a change in the angle of the hinge 702 only in the threshold angle range 740, which is the range of the first threshold angle 741 to the second threshold angle 742.

According to an embodiment, the processor may display the same image irrespective of the change in the angle even if the angle of the hinge 702 changes in a dead zone. Alternatively, the processor may turn off the display 701 in a dead zone. For example, the processor may turn off the display 701 in the range of the first angle 721 to the first threshold angle 741. For example, the processor may display an image matched to the first threshold angle 741 irrespective of the change in the angle of the hinge 702 in the range of the first angle 721 to the first threshold angle 741.

In an embodiment not shown, an electronic device including a flexible display with a rollable area may set a dead zone to prevent malfunction. The electronic device including the flexible display with the rollable area may operate in the same manner as the electronic device 700 including the flexible display 701 with the folding area, as described below.

According to an embodiment, the processor may set a threshold rotation angle range for the range of a first rotation angle to a second rotation angle in which the motor can operate. According to an embodiment, the processor may match a plurality of images included in the video 730 only to angles within the threshold rotation angle range. According to an embodiment, the ranges outside the threshold rotation angle range may be dead zones. According to an embodiment, the processor may display a matched image on the display according to a change in the rotation angle of the motor only in the threshold rotation angle range, which is the range of the first threshold rotation angle to the second threshold rotation angle. According to an embodiment, the processor may display the same image irrespective of the change in the angle even if the angle of the motor changes in a dead zone.

In an embodiment not shown, an electronic device including a general display panel rather than a flexible display may set a dead zone to prevent malfunction. Accordingly, the electronic device including the display panel and a hinge connecting a housing portion and a main body portion may operate in the same manner as the electronic device 700 including the flexible display 701 with the folding area, as described below.

According to an embodiment, the processor may match a plurality of images included in the video 730 only to angles within a threshold angle range. According to an embodiment, the ranges outside the threshold angle range may be dead zones. According to an embodiment, the processor may display a matched image on the display according to a change in the angle of the hinge only in the threshold angle range, which is the range of the first threshold angle to the second threshold angle.

According to an embodiment, the processor may display the same image irrespective of the change in the angle even if the angle of the hinge 702 changes in a dead zone. Alternatively, the processor may turn off the display 701 in a dead zone.

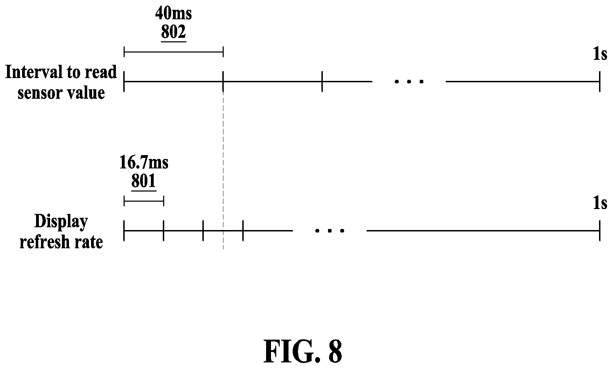

FIG. 8 is a diagram illustrating an example of displaying an image according to an embodiment of the disclosure.

Referring to FIG. 8, an interval 802 (hereinafter, the second interval) at which a processor (e.g., the processor 120 of FIG. 1 and the processor 605 of FIG. 6) reads a sensor value and an interval 801 (hereinafter, the first interval) at which a display (e.g., the display module 160 of FIG. 1 and the display 601 of FIG. 6) displays an image, i.e., the refresh rate of the display, are shown.

According to an embodiment, the first interval 801 may be shorter than the second interval 802. If the first interval 801 is shorter than the second interval 802, the processor displays only an image corresponding to the read sensor value and thus, may display an image only every second interval 802 even though the processor can display more images per second on the display. Therefore, when an image corresponding to the current sensor value is provided every second interval 802, the user may feel like the video is not smooth but choppy. Therefore, a method of synchronizing with the first interval 801 to provide a smooth video to the user will be described below.

Referring to FIG. 8, the processor may read sensor values collected by a plurality of sensors (e.g., the sensor module 176 of FIG. 1 and the plurality of sensors 603 of FIG. 6) from a memory (e.g., the memory 130 of FIG. 1 and the memory 604 of FIG. 6) every second interval 802. For example, the processor may read a sensor value from the memory every 40 ms (i.e., 25 Hz). The display may display an image every first interval 801. For example, the display may display an image every 16.7 ms (i.e., 60 Hz).

According to an embodiment, if the first interval 801 is shorter than the second interval 802, the processor may display a plurality of images on the display in synchronization with the first interval 801.

According to an embodiment, if the first interval 801 is shorter than the second interval 802, the processor may synchronize with the first interval 801 by displaying a number of images corresponding to a value obtained by dividing the second interval 802 by the first interval 801 on the display every second interval 802. Among a number of images corresponding to the value obtained by dividing the second interval 802 by the first interval 801, one image may be an image corresponding to a sensor value read at the second interval 802. The remaining images may be images corresponding to the first interval 801.

For example, if the display has a refresh rate of 60 Hz, the first interval 801 may be 16.7 ms. The processor may cause the display to display 2.4 (40 ms/16.7 ms) images rather than one image every second interval 802 in synchronization with 60 Hz. The processor may cause the display to display about two images every second interval 802. At this time, one of the two images may be an image corresponding to the sensor value read at the second interval 802. The remaining one may be an image corresponding to the first interval.

For example, if the display has a refresh rate of 120 Hz, the first interval 801 may be 8.33 ms. The processor may cause the display to display 4.8 (40 ms/8.33 ms) images rather than one image every second interval 802 in synchronization with 120 Hz. The processor may cause the display to display about four images every second interval 802. At this time, one of the four images may be an image corresponding to the sensor value read at the second interval 802. The remaining one may be an image corresponding to the first interval.

According to an embodiment, the processor may load a second plurality of images corresponding to the sensor values read every second interval 802. The processor may load a first plurality of images corresponding to the values calculated every first interval 801. The processor may display the first plurality of images and the second plurality of images on the display for a uniform period of time.

Hereinafter, a synchronization method of an electronic device including a flexible display with at least one folding area will be described.

According to an embodiment, the processor may determine a hinge angle by reading folding data every second interval 802 and load an image matched to the determined hinge angle. For example, the processor may load an image matched to the hinge angle determined using the folding data every 40 ms, which is the second interval 802.

According to an embodiment, the processor may calculate the folding speed at which at least one hinge is folded or unfolded using the folding data received every second interval 802. The processor may calculate the hinge angle when the first interval 801 elapses from the current time based on the folding speed. The processor may load an image matched to the calculated hinge angle when the first interval elapses from the current time.

According to an embodiment, the processor may display a loaded plurality of images on the flexible display at regular intervals.

Accordingly, even if the next second interval 801 is not reached after the image according to the second interval 801 is displayed, the processor may display the loaded image at regular intervals, thereby providing a smoother image to a user.

Hereinafter, a synchronization method of an electronic device including a flexible display with at least one rollable area will be described.

According to an embodiment, the processor may determine a rotation angle of at least one motor by reading data related to the motor every second interval 802 and load an image matched to the determined rotation angle.

According to an embodiment, the processor may calculate the rotation speed at which the at least one motor rotates using the data received every second interval 802. The processor may calculate the rotation angle when the first interval 801 elapses from the current time based on the rotation speed. The processor may load an image matched to the calculated rotation angle when the first interval elapses from the current time.

According to an embodiment, the processor may display a loaded plurality of images on the flexible display at regular intervals.

Accordingly, even if the next second interval 801 is not reached after the image according to the second interval 801 is displayed, the processor may display the loaded image at regular intervals, thereby providing a smoother image to a user.

Hereinafter, a synchronization method of an electronic device including a general display panel rather than a flexible display will be described.

According to an embodiment, the processor may determine a hinge angle by reading data related to the state of at least one hinge every second interval 802 and load an image matched to the determined hinge angle.

According to an embodiment, the processor may calculate the speed at which at least one hinge is folded or unfolded using the data received every second interval 802. The processor may calculate the hinge angle when the first interval 801 elapses from the current time based on the speed. The processor may load an image matched to the calculated hinge angle when the first interval elapses from the current time.

According to an embodiment, the processor may display a loaded plurality of images on the display panel at regular intervals.

Accordingly, even if the next second interval 801 is not reached after the image according to the second interval 801 is displayed, the processor may display the loaded image at regular intervals, thereby providing a smoother image to a user.

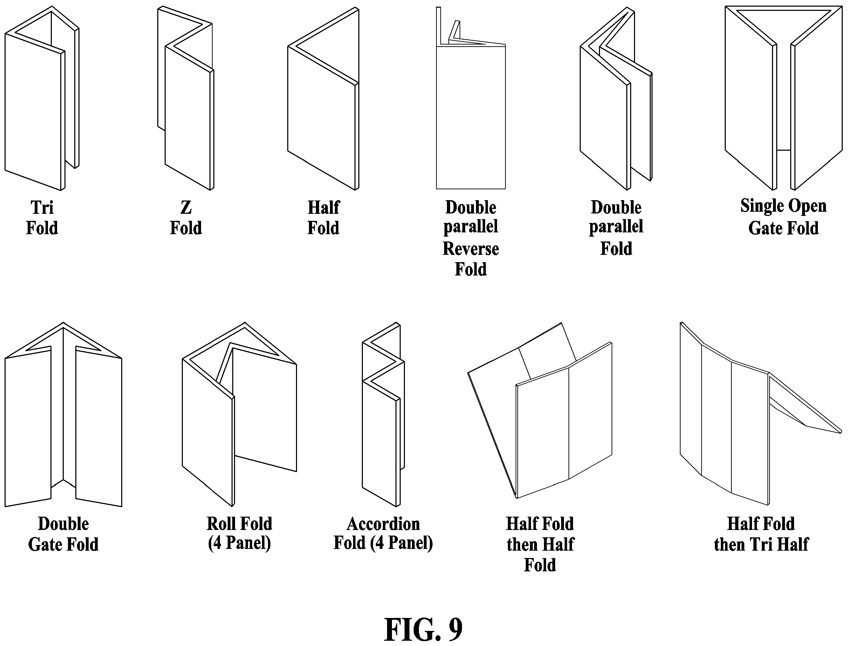

FIG. 9 is a diagram illustrating an electronic device having various form factors to perform operations according to an embodiment of the disclosure.

Referring to FIG. 9, various form factors of an electronic device (e.g., the electronic device 101 of FIG. 1, the electronic device 600 of FIG. 6, and the electronic device 700 of FIG. 7) to which an operating method described herein is applicable are shown.

Referring to FIG. 9, the electronic device corresponding to the form factors to which the operating method described herein is applicable may include a flexible display (e.g., the display module 160 of FIG. 1, the display 250 of FIG. 2, the display 601 of FIG. 6, and the display 701 of FIG. 7) with at least one folding area (e.g., the folding area 253 of FIG. 2), and at least one hinge (e.g., the hinge structure 230 of FIG. 2, the hinge 602 of FIG. 6, and the hinge 702 of FIG. 7) capable of deforming the at least one folding area to an unfolded state or a folded state.

According to an embodiment, the display may display a wallpaper and/or a lock screen. The wallpaper and/or the lock screen may be set with a video. The electronic device may provide a user with playback or reverse playback of the video according to the display being unfolded or folded. For example, if the display is unfolded, the display may display the video played forward. For example, if the display is folded, the display may display the video played backward. For example, if the display is placed in a stationary state while being folded, the display may display a paused video.

According to an embodiment not shown, the operating method of an electronic device described herein may also apply to an electronic device including a flexible display with a rollable area and an electronic device including a general display panel, rather than a flexible display with a folding area.

FIG. 10 is a diagram illustrating an operation of an electronic device including a flexible display according to an embodiment of the disclosure.

Referring to FIG. 10, an electronic device 1000 (e.g., the electronic device 101 of FIG. 1, the electronic device 600 of FIG. 6, and the electronic device 700 of FIG. 7) that is deformed from a folded state (e.g., the folded state 711 of FIG. 7) to an unfolded state (e.g., the unfolded state 712 of FIG. 7) and then to the folded state again is shown.

The electronic device 1000 may include a flexible display 1001 (e.g., the display module 160 of FIG. 1, the display 250 of FIG. 2, the display 601 of FIG. 6, and the display 701 of FIG. 7) with at least one folding area (e.g., the folding area 253 of FIG. 1), and at least one hinge (e.g., the hinge structure 230 of FIG. 2, the hinge 602 of FIG. 6, and the hinge 702 of FIG. 7) capable of deforming the at least one folding area.

The flexible display 1001 may display a wallpaper and/or a lock screen that plays a video (e.g., the video 730 of FIG. 7) set by a user.

According to an embodiment, a processor may display, on the flexible display 1001, an image matched to an angle between a first angle (e.g., the first angle 721 of FIG. 7) and a second angle (e.g., the second angle of FIG. 7) at which the at least one hinge can operate. According to an embodiment, the processor may sequentially match the first to last images displayed when playing the video forward to angles between the first angle and the second angle.

According to an embodiment, since the plurality of images included in the video are sequentially matched to the angles between the first angle and the second angle, the video including the plurality of images may be played forward when the at least one folding area is deformed to an unfolded state. The video including the plurality of images may be played backward when the at least one folding area is deformed to a folded state. The playback of the video including the plurality of images may be paused when the at least one folding area is in a stationary state.

According to an embodiment, the processor may apply a fade effect to an image matched to the first angle or the second angle when the at least one hinge reaches the first angle or the second angle.

According to an embodiment, the processor may apply a fade effect to the image matched to the first angle and a portion of an image displayed after the image matched to the first angle when the video is played forward, if the at least one hinge is folded and reaches the first angle. According to an embodiment, the processor may apply a fade-in effect that gradually brightens for a predetermined time or a fade-out effect that gradually darkens for a predetermined time to the image matched to the first angle and the portion of the image displayed after the image matched to the first angle when the video is played forward.

According to an embodiment, the processor may apply a fade effect to the image matched to the second angle and a portion of an image displayed before the image matched to the second angle when the video is played forward, if the at least one hinge is unfolded and reaches the second angle. According to an embodiment, the processor may apply a fade-in effect that gradually brightens for a predetermined time or a fade-out effect that gradually darkens for a predetermined time to the image matched to the second angle and the portion of the image displayed before the image matched to the second angle when the video is played forward.

The embodiments disclosed herein may also apply not only to the electronic device 1000 including the flexible display 1001 that can be folded left and right, such as the electronic device 1000, but also to the electronic device including a flexible display that can be folded up and down and having various form factors shown in FIG. 9.

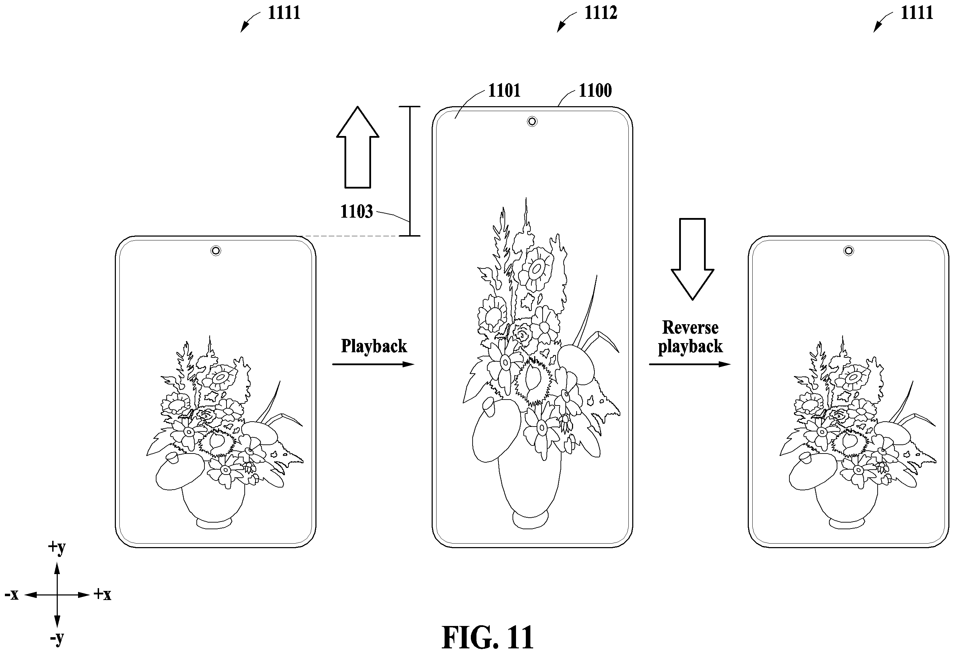

FIG. 11 is a diagram illustrating an operation of an electronic device including a flexible display according to an embodiment of the disclosure.

Referring to FIG. 11, an electronic device (e.g., the electronic device 101 of FIG. 1 and the electronic device 600 of FIG. 6) that is deformed from a closed state 1111 to an open state 1112 and then to the closed state 1111 again is shown.

The electronic device 1100 may include a flexible display 1101 (e.g., the display module 160 of FIG. 1 and the display 601 of FIG. 6) with at least one rollable area 1103 and at least one motor capable of deforming the at least one rollable area. The rollable area 1103 may be an area where the flexible display 1101 is rolled by the motor.

The flexible display 1101 may display a wallpaper and/or a lock screen that plays a video (e.g., the video 703 of FIG. 7) set by a user.

According to an embodiment, a processor (e.g., the processor 120 of FIG. 1 and the processor 605 of FIG. 6) may display, on the flexible display 1101, an image matched to a rotation angle between a first rotation angle and a second rotation angle at which the at least one motor can operate. According to an embodiment, the processor may sequentially match the first to last images displayed when playing the video forward to rotation angles between the first rotation angle and the second rotation angle.

According to an embodiment, since the plurality of images included in the video are sequentially matched to the rotation angles between the first rotation angle and the second rotation angle, the video including the plurality of images may be played forward when the at least one rollable area 1103 is deformed to the open state 1112. The video including the plurality of images may be played backward when the at least one rollable area 1103 is deformed to the closed state 1111. The playback of the video including the plurality of images may be paused when the at least one rollable area 1103 is in a stationary state.

According to an embodiment, the processor may apply a fade effect to an image matched to the first rotation angle or the second rotation angle when the at least one motor reaches the first rotation angle or the second rotation angle.

According to an embodiment, the processor may apply a fade effect to the image matched to the first rotation angle and a portion of an image displayed after the image matched to the first rotation angle when the video is played forward, if the at least one rollable region 1103 is rolled such that the at least one motor reaches the first rotation angle. According to an embodiment, the processor may apply a fade-in effect that gradually brightens for a predetermined time or a fade-out effect that gradually darkens for a predetermined time to the image matched to the first rotation angle and the portion of the image displayed after the image matched to the first rotation angle when the video is played forward.

According to an embodiment, the processor may apply a fade effect to the image matched to the second rotation angle and a portion of an image displayed before the image matched to the second rotation angle when the video is played forward, if the at least one rollable region 1103 is unrolled such that the at least one motor reaches the second rotation angle. According to an embodiment, the processor may apply a fade-in effect that gradually brightens for a predetermined time or a fade-out effect that gradually darkens for a predetermined time to the image matched to the second rotation angle and the portion of the image displayed before the image matched to the second rotation angle when the video is played forward.

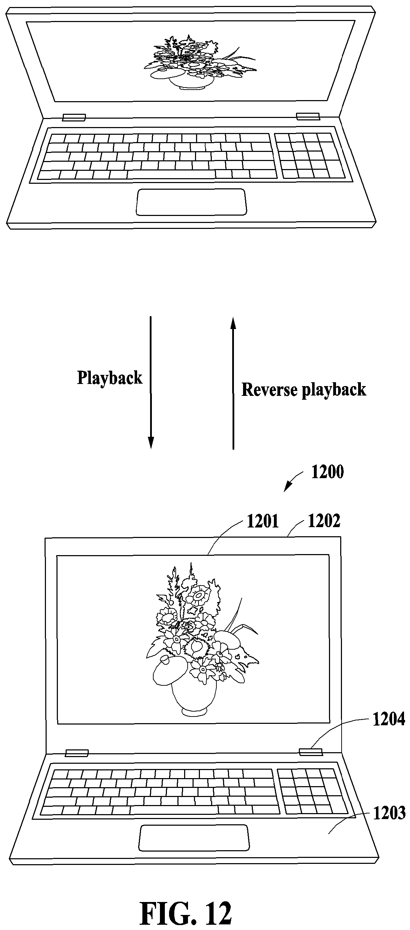

FIG. 12 is a diagram illustrating an operation of an electronic device according to an embodiment of the disclosure.

Referring to FIG. 12, an electronic device 1200 (e.g., the electronic device 101 of FIG. 1 and the electronic device 600 of FIG. 6) that is deformed from a folded state to an unfolded state and then to the folded state again is shown.

The electronic device 1200 may include a housing portion 1202 including a display panel 1201 (e.g., the display module 160 of FIG. 1 and the display 601 of FIG. 6) and a main body portion 1203. The main body portion 1203 may include a memory (e.g., the memory 130 of FIG. 1 and the memory 604 of FIG. 6), a plurality of sensors (e.g., the sensor module 176 of FIG. 1 and the plurality of sensors 603 of FIG. 6), and a processor (e.g., the processor 120 of FIG. 1). The housing portion 1202 and the main body portion 1203 may be connected through a hinge 1204 (e.g., the hinge 602 of FIG. 6). The hinge 1204 may deform the housing portion and the main body portion to a folded state or an unfolded state in a range of a first angle to a second angle.

The display panel 1201 may display a wallpaper and/or a lock screen that plays a video (e.g., the video 730 of FIG. 7) set by a user.

According to an embodiment, the processor may display, on the display panel 1201, an image matched to an angle between the first angle and the second angle at which the at least one hinge 1204 can operate. According to an embodiment, the processor may sequentially match the first to last images displayed when playing the video forward to angles between the first angle and the second angle.

According to an embodiment, since the plurality of images included in the video are sequentially matched to the angles between the first angle and the second angle, the video including the plurality of images may be played forward when the housing portion 1202 and the main body portion 1203 connected by the at least one hinge are deformed to the unfolded state. The video including the plurality of images may be played backward when the housing portion 1202 and the main body portion 1203 connected by the at least one hinge are deformed to the folded state. The playback of the video including the plurality of images may be paused when the housing portion 1202 and the main body portion 1203 connected by the at least one hinge are in a stationary state.

According to an embodiment, the processor may apply a fade effect to an image matched to the first angle or the second angle when the at least one hinge 1204 reaches the first angle or the second angle.

According to an embodiment, the processor may apply a fade effect to the image matched to the first angle and a portion of an image displayed after the image matched to the first angle when the video is played forward, if the at least one hinge 1204 is folded and reaches the first angle. According to an embodiment, the processor may apply a fade-in effect that gradually brightens for a predetermined time or a fade-out effect that gradually darkens for a predetermined time to the image matched to the first angle and the portion of the image displayed after the image matched to the first angle when the video is played forward.

According to an embodiment, the processor may apply a fade effect to the image matched to the second angle and a portion of an image displayed before the image matched to the second angle when the video is played forward, if the at least one hinge 1204 is unfolded and reaches the second angle. According to an embodiment, the processor may apply a fade-in effect that gradually brightens for a predetermined time or a fade-out effect that gradually darkens for a predetermined time to the image matched to the second angle and the portion of the image displayed before the image matched to the second angle when the video is played forward.

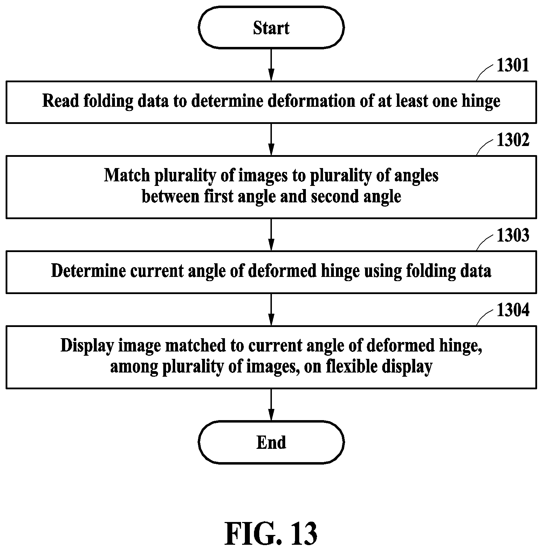

FIG. 13 is a flowchart illustrating an operation of an electronic device according to an embodiment of the disclosure.

In the following embodiment, operations may be performed sequentially, but are not necessarily performed sequentially. For example, the operations may be performed in different orders, and at least two of the operations may be performed in parallel. Operations 1301 to 1304 may be performed by at least one component (e.g., the processor 120 of FIG. 1) of an electronic device (e.g., the electronic device 101 of FIG. 1, the electronic device 200 of FIG. 2, the electronic device 600 of FIG. 6, the electronic device 700 of FIG. 7, and the electronic device 1000 of FIG. 10).

In operation 1301, the electronic device may read folding data to determine deformation of at least one hinge (e.g., the hinge structure 230 of FIG. 2, the hinge 602 of FIG. 6, and the hinge 702 of FIG. 7).

In operation 1302, the electronic device may match a plurality of images to a plurality of angles between a first angle (e.g., the first angle 721 of FIG. 7) and a second angle (e.g., the second angle 722 of FIG. 7), respectively.

In operation 1303, the electronic device may determine the current angle of the deformed hinge using the folding data.

In operation 1304, the electronic device may display an image matched to the current angle of the deformed hinge, among the plurality of images, on a flexible display (e.g., the display module 160 of FIG. 1, the display 250 of FIG. 2, the display 601 of FIG. 6, the display 701 of FIG. 7, and the flexible display 1001 of FIG. 10).

The descriptions provided with reference to FIG. 1 to 12 may apply to the operations shown in FIG. 13, and thus a further detailed description thereof will be omitted.

According to an embodiment, an electronic device (e.g., the electronic device 101 of FIG. **1****,** the electronic device 200 of FIG. 2, the electronic device 600 of FIG. 6, the electronic device 700 of FIG. 7, and the electronic device 1000 of FIG. 10) may include a flexible display (e.g., the display module 160 of FIG. 1, the display 250 of FIG. 2, the display 601 of FIG. 7, the display 701 of FIG. 7, and the flexible display 1001 of FIG. 10) with at least one folding area (e.g., the folding area 253 of FIG. 1). The folding area may be an area where the flexible display is folded. The electronic device may include at least one hinge (e.g., the hinge structure 230 of FIG. 1, the hinge 602 of FIG. 6, and the hinge 702 of FIG. 7) capable of deforming the at least one folding area to an unfolded state (e.g., the unfolded state 712 of FIG. 7) or a folded state (e.g., the folded state 711 of FIG. 7). The at least one hinge may be folded or unfolded between a first angle (e.g., the first angle 721 of FIG. 7) and a second angle (e.g., the second angle 722 of FIG. 7). The electronic device may include (e.g., the sensor module 176 of FIG. 1 and the plurality of sensors 603 of FIG. 6) configured to collect folding data including information on a state of the at least one hinge. The electronic device may include a memory (e.g., the memory 130 of FIG. 1 and the memory 604 of FIG. 6) storing a video (e.g., the video 730 of FIG. 7) including a plurality of images to be displayed on the flexible display and the folding data. The electronic device may include a processor (e.g., the processor 120 of FIG. 1 and the processor 605 of FIG. 6) configured to read the folding data to determine the deformation of the at least one hinge. The electronic device may include the processor configured to match the plurality of images to a plurality of angles between the first angle and the second angle. The electronic device may include the processor configured to determine a current angle of the deformed hinge using the folding data. The electronic device may include the processor configured to display an image matched to the current angle of the deformed hinge, among the plurality of images, on the flexible display.

According to an embodiment, the processor may match first to last images displayed when the video is played forward, among the plurality of images, to the first angle to the second angle by an equal angle. The first angle may be smaller than the second angle. The equal angle may be an angle obtained by dividing a difference between the first angle and the second angle by the number of the plurality of images.

According to an embodiment, the processor may match the plurality of images to a plurality of angles between a first threshold angle (e.g., the first threshold angle 741 of FIG. 7) and a second threshold angle (e.g., the second threshold angle 742 of FIG. 7), respectively. The first angle may be smaller than the second angle. The first threshold angle may be larger than the first angle and smaller than the second angle. The second threshold angle may be larger than the first threshold angle and smaller than the second angle.

According to an embodiment, the processor may display an image matched to the first threshold angle on a screen of the flexible display while the at least one hinge is being unfolded to the first threshold angle, when the at least one hinge is unfolded and the hinge angle determined using the folding data is between the first angle and the first threshold angle.

According to an embodiment, the processor may display the image matched to the first threshold angle on the screen of the flexible display while the at least one hinge is being folded to the first angle, when the at least one hinge is folded and the hinge angle determined using the folding data is between the first angle and the first threshold angle.

According to an embodiment, the processor may display an image matched to a plurality of angles between the first threshold angle and the second threshold angle on a screen of the flexible display while the at least one hinge is being unfolded to the second threshold angle, when the at least one hinge is unfolded and the hinge angle determined using the folding data is between the first threshold angle and the second threshold angle.

According to an embodiment, the processor may display an image matched to the plurality of angles between the first threshold angle and the second threshold angle on the screen of the flexible display while the at least one hinge is being folded to the first threshold angle, when the at least one hinge is folded and the hinge angle determined using the folding data is between the first threshold angle and the second threshold angle.

According to an embodiment, the processor may display an image matched to the second threshold angle on a screen of the flexible display while the at least one hinge is being unfolded to the second angle, when the at least one hinge is unfolded and the hinge angle determined using the folding data is between the second threshold angle and the second angle. The processor may display the image matched to the second threshold angle on the screen of the flexible display while the at least one hinge is being folded to the second threshold angle, when the at least one hinge is folded and the hinge angle determined using the folding data is between the second threshold angle and the second angle.

According to an embodiment, the processor may cause the flexible display to display an image every first interval (e.g., the first interval 801 of FIG. 8). The processor may read the folding data from the memory every second interval (e.g., the second interval 802 of FIG. 8). The processor may display the plurality of images on the flexible display in synchronization with the first interval if the first interval is shorter than the second interval.

According to an embodiment, the processor may, for every second interval, determine a hinge angle using the folding data read every second interval. The processor may load an image matched to the hinge angle, among images matched to a plurality of angles between the first angle and the second angle. The processor may, for every first interval, calculate a folding speed at which the at least one hinge is folded or unfolded using the folding data received every second interval. The processor may calculate a hinge angle when the first interval elapses using the folding speed, and load an image matched to the hinge angle when the first interval elapses, among the images matched to the plurality of angles between the first angle and the second angle. The processor may display the plurality of loaded images on the flexible display at regular intervals.

According to an embodiment, the processor may play the video including the plurality of images forward when the at least one folding area is deformed to the unfolded state. The processor may play the video including the plurality of images backward when the at least one folding area is deformed to the folded state. The processor may pause the playback of the video including the plurality of images when the at least one folding area is in a stationary state.

According to an embodiment, the first angle may be smaller than the second angle. The processor may apply a fade effect to an image matched to the first angle and a portion of an image displayed after the image matched to the first angle when the video is played forward, if the at least one hinge is folded and reaches the first angle. The processor may apply a fade effect to an image matched to the second angle and a portion of an image displayed before the image matched to the second angle when the video is played forward, if the at least one hinge is unfolded and reaches the second angle.

According to an embodiment, an electronic device (e.g., the electronic device 101 of FIG. 1, the electronic device 600 of FIG. 6, and the electronic device 1100 of FIG. 11) may include a flexible display (e.g., the display module 160 of FIG. 1, the display 601 of FIG. 6, and the flexible display 1101 of FIG. 11) with at least one rollable area (e.g., the rollable area 1103 of FIG. 11). The rollable area may be an area where the flexible display is rolled by a motor. The electronic device may include at least one motor capable of deforming the at least one rollable area to an open state (e.g., the open state 1112 of FIG. 11) or a closed state (e.g., the closed state 1111 of FIG. 11). The at least one motor may operate in a range of a first rotation angle to a second rotation angle. The electronic device may include a plurality of sensors (e.g., the sensor module 176 of FIG. 1 and the plurality of sensors 603 of FIG. 6) configured to collect data including information on a state of the at least one motor. The electronic device may include a memory (e.g., the memory 130 of FIG. 1 and the memory 604 of FIG. 6) storing a video (e.g., the video 730 of FIG. 7) including a plurality of images to be displayed on the flexible display and the data. The electronic device may include a processor (e.g., the processor 120 of FIG. 1 and the processor 605 of FIG. 6) configured to read the data to determine the deformation of the at least one rollable area. The electronic device may include the processor configured to match the plurality of images to a plurality of angles between the first rotation angle and the second rotation angle. The electronic device may include the processor configured to determine a current rotation angle of the at least one motor using the data. The electronic device may include the processor configured to display an image matched to the current rotation angle of the at least one motor, among the plurality of images, on the flexible display.

According to an embodiment, the processor may match first to last images displayed when the video is played forward, among the plurality of images, to the first rotation angle to the second rotation angle by an equal angle. The first rotation angle may be smaller than the second rotation angle. The equal angle may be an angle obtained by dividing a difference between the first rotation angle and the second rotation angle by the number of the plurality of images.

According to an embodiment, the processor may cause the flexible display to display an image every first interval. The processor may read the data from the memory every second interval, and display the plurality of images on the flexible display in synchronization with the first interval if the first interval is shorter than the second interval.

According to an embodiment, the processor may, for every second interval, determine a rotation angle using the data read every second interval. The processor may load an image matched to the rotation angle, among images matched to a plurality of angles between the first rotation angle and the second rotation angle. The processor may, for every first interval, calculate a rotation speed at which the at least one motor rotates using the data received every second interval. The processor may calculate a rotation angle when the first interval elapses using the rotation speed. The processor may load an image matched to the rotation angle when the first interval elapses, among images matched to a plurality of angles between the first rotation angle and the second rotation angle. The processor may display the plurality of loaded images on the flexible display at regular intervals.

According to an embodiment, the processor may play the video including the plurality of images forward when the at least one rollable area is deformed to the open state. The processor may play the video including the plurality of images backward when the at least one rollable area is deformed to the closed state. The processor may pause the playback of the video including the plurality of images when the at least one rollable area is in a stationary state.

According to an embodiment, the processor may apply a fade effect to the image matched to the first rotation angle and a portion of an image displayed after the image matched to the first rotation angle when the video is played forward, if the at least one rollable region is rolled such that the at least one motor reaches the first rotation angle. The processor may apply a fade effect to the image matched to the second rotation angle and a portion of an image displayed before the image matched to the second rotation angle when the video is played forward, if the at least one rollable region is unrolled such that the at least one motor reaches the second rotation angle.

According to an embodiment, an electronic device (e.g., the electronic device 101 of FIG. 1, the electronic device 600 of FIG. 6, and the electronic device 1200 of FIG. 12) may include a housing portion (e.g., the housing portion 1202 of FIG. 12) including a display panel (e.g., the display module 160 of FIG. 1, the display 601 of FIG. 6, and the display panel 1101 of FIG. 12). The electronic device may include a main body portion (e.g., the main body portion 1203 of FIG. 12) including a processor (e.g., the processor 120 of FIG. 1 and the processor 605 of FIG. 6), a memory (e.g., the memory 130 of FIG. 1 and the memory 604 of FIG. 6), and a plurality of sensors (e.g., the sensor module 176 of FIG. 1 and the plurality of sensors 603 of FIG. 6). The electronic device may include at least one hinge (e.g., the hinge 602 of FIG. 6 and the hinge 1204 of FIG. 12) connecting the housing portion and the main body portion, and capable of deforming the housing portion and the main body portion to a folded state or an unfolded state in a range of a first angle to a second angle. The plurality of sensors may collect data including information about a state of the at least one hinge. The memory may store a video (e.g., the video 730 of FIG. 7) including a plurality of images to be displayed on the display panel and the data. The processor may read the data to determine the deformation of the at least one hinge. The processor may match the plurality of images to a plurality of angles between the first angle and the second angle, respectively. The processor may determine a current angle of the deformed hinge using the data. The processor may display an image matched to the current angle of the deformed hinge, among the plurality of images, on the display panel.

According to an embodiment, the processor may match first to last images displayed when the video is played forward, among the plurality of images, to the first angle to the second angle by an equal angle. The first angle may be smaller than the second angle. The equal angle may be an angle obtained by dividing a difference between the first angle and the second angle by the number of the plurality of images.

According to an embodiment, the processor may cause the display panel to display an image every first interval. The processor may read data from the memory every second interval. The processor may display the plurality of images on the display panel in synchronization with the first interval if the first interval is shorter than the second interval.

According to an embodiment, the processor may, for every second interval, determine a hinge angle using the data read every second interval. The processor may load an image matched to the hinge angle, among images matched to a plurality of angles between the first angle and the second angle. The processor may, for every first interval, calculate a speed at which the at least one hinge is folded or unfolded using the data received every second interval. The processor may calculate a hinge angle when the first interval elapses using the speed. The processor may load an image matched to the hinge angle when the first interval elapses, among images matched to a plurality of angles between the first angle and the second angle. The processor may display the plurality of loaded images on the display panel at regular intervals.

According to an embodiment, the processor may play the video including the plurality of images forward when the housing portion and the main body portion connected by the at least one hinge are deformed to the unfolded state. The processor may play the video including the plurality of images backward when the housing portion and the main body portion connected by the at least one hinge are deformed to the folded state. The processor may pause the playback of the video including the plurality of images when the housing portion and the main body portion connected by the at least one hinge are in a stationary state.

According to an embodiment, the first angle may be smaller than the second angle. The processor may apply a fade effect to an image matched to the first angle and a portion of an image displayed after the image matched to the first angle when the video is played forward, if the at least one hinge is folded and reaches the first angle. The processor may apply a fade effect to an image matched to the second angle and a portion of an image displayed before the image matched to the second angle when the video is played forward, if the at least one hinge is unfolded and reaches the second angle.

The embodiments of the present disclosure disclosed in the specification and the drawings are merely presented to easily describe the technical contents of various embodiments of the present disclosure and help the understanding of them and are not intended to limit the various embodiments. Therefore, all changes or modifications derived from the technical idea of the various embodiments of the present disclosure as well as the embodiments disclosed herein should be construed to fall within the various embodiments.

## Claims

1. An electronic device (101; 200; 600; 700; 1000) comprising:
a flexible display (160; 250; 601; 701; 1001) with at least one folding area (253), the folding area (253) being an area where the flexible display (160; 250; 601; 701; 1001) is folded;
at least one hinge (230; 602; 702) capable of deforming the at least one folding area (253) to an unfolded state (712) or a folded state (711), the at least one hinge (230; 602; 702) being folded or unfolded between a first angle (721) and a second angle (722);
a plurality of sensors (176; 603) configured to collect folding data comprising information on a state of the at least one hinge (230; 602; 702);
a memory (130; 604) storing a video (730) comprising a plurality of images to be displayed on the flexible display (160; 250; 601; 701; 1001) and the folding data; and
a processor (120; 605) configured to read the folding data to determine the deformation of the at least one hinge (230; 602; 702), match the plurality of images to a plurality of angles between the first angle (721) and the second angle (722), determine a current angle of the deformed hinge (230; 602; 702) using the folding data, and display an image matched to the current angle of the deformed hinge (230; 602; 702), among the plurality of images, on the flexible display (160; 250; 601; 701; 1001).

2. The electronic device of claim 1, wherein
the processor (120; 605) is configured to:
match first to last images displayed when the video (730) is played forward,
among the plurality of images, to the first angle (721) to the second angle (722) by an equal angle, the first angle (721) being smaller than the second angle (722), and
the equal angle is an angle obtained by dividing a difference between the first angle (721) and the second angle (722) by the number of the plurality of images.

3. The electronic device of any one of claims 1 and 2, wherein
the processor (120; 605) is configured to:
match the plurality of images to a plurality of angles between a first threshold angle (741) and a second threshold angle (742), respectively, and
the first angle (721) is smaller than the second angle (722), the first threshold angle (741) is larger than the first angle (721) and smaller than the second angle (722), and the second threshold angle (742) is larger than the first threshold angle (741) and smaller than the second angle (722).

4. The electronic device of any one of claims 1 to 3, wherein
the processor (120; 605) is configured to:
display an image matched to the first threshold angle (741) on a screen of the flexible display (160; 250; 601; 701; 1001) while the at least one hinge (230; 602; 702) is being unfolded to the first threshold angle (741), when the at least one hinge (230; 602; 702) is unfolded and the hinge angle determined using the folding data is between the first angle (721) and the first threshold angle (741), and
display the image matched to the first threshold angle (741) on the screen of the flexible display (160; 250; 601; 701; 1001) while the at least one hinge (230; 602; 702) is being folded to the first angle (721), when the at least one hinge (230; 602; 702) is folded and the hinge angle determined using the folding data is between the first angle (721) and the first threshold angle (741).

5. The electronic device of any one of claims 1 to 4, wherein
the processor (120; 605) is configured to:
display an image matched to a plurality of angles between the first threshold angle (741) and the second threshold angle (742) on a screen of the flexible display (160; 250; 601; 701; 1001) while the at least one hinge (230; 602; 702) is being unfolded to the second threshold angle (742), when the at least one hinge (230; 602; 702) is unfolded and the hinge angle determined using the folding data is between the first threshold angle (741) and the second threshold angle (742), and
display an image matched to the plurality of angles between the first threshold angle (741) and the second threshold angle (742) on the screen of the flexible display (160; 250; 601; 701; 1001) while the at least one hinge (230; 602; 702) is being folded to the first threshold angle (741), when the at least one hinge (230; 602; 702) is folded and the hinge angle determined using the folding data is between the first threshold angle (741) and the second threshold angle (742).

6. The electronic device of any one of claims 1 to 5, wherein
the processor (120; 605) is configured to:
display an image matched to the second threshold angle (742) on a screen of the flexible display (160; 250; 601; 701; 1001) while the at least one hinge (230; 602; 702) is being unfolded to the second angle (722), when the at least one hinge (230; 602; 702) is unfolded and the hinge angle determined using the folding data is between the second threshold angle (742) and the second angle (722), and
display the image matched to the second threshold angle (742) on the screen of the flexible display (160; 250; 601; 701; 1001) while the at least one hinge (230; 602; 702) is being folded to the second threshold angle (742), when the at least one hinge (230; 602; 702) is folded and the hinge angle determined using the folding data is between the second threshold angle (742) and the second angle (722).

7. The electronic device of any one of claims 1 to 6, wherein
the processor (120; 605) is configured to:
cause the flexible display (160; 250; 601; 701; 1001) to display an image every first interval (801), read the folding data from the memory (130; 604) every second interval (802), and display the plurality of images on the flexible display (160; 250; 601; 701; 1001) in synchronization with the first interval (801) if the first interval (801) is shorter than the second interval (802).

8. The electronic device of any one of claims 1 to 7, wherein
the processor (120; 605) is configured to:
, for every second interval (802), determine a hinge angle using the folding data read every second interval (802), and load an image matched to the hinge angle, among images matched to a plurality of angles between the first angle (711) and the second angle (712),
, for every first interval (801), calculate a folding speed at which the at least one hinge (230; 602; 702) is folded or unfolded using the folding data received every second interval (802), calculate a hinge angle when the first interval (801) elapses using the folding speed, and load an image matched to the hinge angle when the first interval (801) elapses, among the images matched to the plurality of angles between the first angle (721) and the second angle (722), and
display the plurality of loaded images on the flexible display (160; 250; 601; 701; 1001) at regular intervals.

9. The electronic device of any one of claims 1 to 8, wherein
the processor (120; 605) is configured to:
play the video (730) comprising the plurality of images forward when the at least one folding area (253) is deformed to the unfolded state (712),
play the video (730) comprising the plurality of images backward when the at least one folding area (253) is deformed to the folded state (711), and
pause the playback of the video (730) comprising the plurality of images when the at least one folding area (253) is in a stationary state.

10. The electronic device of any one of claims 1 to 9, wherein
the first angle (721) is smaller than the second angle (722), and
the processor (120; 605) is configured to:
apply a fade effect to an image matched to the first angle (721) and a portion of an image displayed after the image matched to the first angle (721) when the video (730) is played forward, if the at least one hinge (230; 602; 702) is folded and reaches the first angle (721), and
apply a fade effect to an image matched to the second angle (722) and a portion of an image displayed before the image matched to the second angle (722) when the video (730) is played forward, if the at least one hinge (230; 602; 702) is unfolded and reaches the second angle (722).

11. An electronic device (101; 600; 1100) comprising:
a flexible display (160; 604; 1101) with at least one rollable area (1103), the rollable area (1103) being an area where the flexible display (160; 604; 1101) is rolled by a motor;
at least one motor capable of deforming the at least one rollable area (1103) to an open state (1112) or a closed state (1111), the at least one motor operating in a range of a first rotation angle to a second rotation angle;
a plurality of sensors (176; 603) configured to collect data comprising information on a state of the at least one motor;
a memory (130; 604) storing a video (730) comprising a plurality of images to be displayed on the flexible display (160; 604; 1101) and the data; and
a processor (120; 605) configured to read the data to determine the deformation of the at least one rollable area (1103), match the plurality of images to a plurality of angles between the first rotation angle and the second rotation angle, respectively, determine a current rotation angle of the at least one motor using the data, and display an image matched to the current rotation angle of the at least one motor, among the plurality of images, on the flexible display (160; 604; 1101).

12. The electronic device of claim 11, wherein
the processor (120; 605) is configured to:
match first to last images displayed when the video (730) is played forward,
among the plurality of images, to the first rotation angle to the second angle by an equal angle, the first rotation angle being smaller than the second rotation angle, and
the equal angle is an angle obtained by dividing a difference between the first rotation angle and the second rotation angle by the number of the plurality of images.

13. The electronic device of any one of claims 11 and 12, wherein
the processor (120; 605) is configured to:
cause the flexible display (160; 604; 1101) to display an image every first interval (801), read the data from the memory every second interval (802), and
display the plurality of images on the flexible display (160; 604; 1101) in synchronization with the first interval (801) if the first interval (801) is shorter than the second interval (8020.

14. The electronic device of any one of claims 11 to 13, wherein
the processor (120; 605) is configured to play the video (730) comprising the plurality of images forward when the at least one rollable area (1103) is deformed to the open state (1112), play the video (730) comprising the plurality of images backward when the at least one rollable area (1103) is deformed to the closed state (1111), and pause the playback of the video (730) comprising the plurality of images when the at least one rollable area (11030 is in a stationary state.

15. An electronic device (101; 600; 1200) comprising:
a housing portion (1202) comprising a display panel (160; 601; 1201);
a main body portion (1203) comprising a processor (120; 605), a memory (130; 604), and a plurality of sensors (176; 603); and
at least one hinge (602; 1204) connecting the housing portion (1202) and the main body portion (1203), and capable of deforming the housing portion (1202) and the main body portion (1203) to a folded state or an unfolded state in a range of a first angle to a second angle,
wherein the plurality of sensors (176; 603) are configured to collect data comprising information about a state of the at least one hinge (602; 1204),
the memory (130; 604) is configured to store a video (730) comprising a plurality of images to be displayed on the display panel (160; 601; 1201) and the data, and
the processor (120; 605) is configured to:
read the data to determine the deformation of the at least one hinge (602; 1204),
match the plurality of images to a plurality of angles between the first angle and the second angle, respectively, determine a current angle of the deformed hinge (602; 1204) using the data, and display an image matched to the current angle of the deformed hinge (602; 1204), among the plurality of images, on the display panel (160; 601; 1201).
